# EUROPEAN PATENT SPECIFICATION

(11) **EP 1 378 180 B1**
(45) Date of publication and mention of the grant of the patent: **07.01.2009**
(21) Application number: 03254187.2
(22) Date of filing: 01.07.2003
(51) Int. Cl.: A23L 1/32, A23L 1/275

(54) **Egg substitutes**
Eiersätze
Succedanes d'oeuf

(30) Priority: 03.07.2002 GB 0215365; 12.07.2002 GB 0216133
(43) Date of publication of application: 07.01.2004
(73) Proprietor: Frederick Wade Mussawir-Key, Sidcup, Kent DA15 7HL (GB)
(72) Inventor: Frederick Wade Mussawir-Key, Sidcup, Kent DA15 7HL (GB)
(74) Representative: Womsley, Nicholas

(56) References cited:
- EP-A- 1 186 245
- WO-A-01/08511
- WO-A-89/10704
- GB-A- 716 685
- GB-A- 1 533 084
- US-A- 3 681 082
- US-A- 3 806 608
- US-A- 3 864 500
- US-A- 4 882 193
- US-A- 5 227 189
- DATABASE WPI Section Ch, Week 199132 Derwent Publications Ltd., London, GB; Class A97, AN 1991-230544 XP002257566 & CA 2 007 527 A (PAPETTIS HYGRADE E), 1 June 1991 (1991-06-01)

## Description

The present invention relates to food products and more particularly, but not exclusively, to low fat and reduced cholesterol and cholesterol free food products which can be substituted for beaten egg.

Low density cholesterol in the blood stream can present a significant health problem. Thus, most people and certainly those with high levels of low density cholesterol are advised to limit the amount of cholesterol in their diet. Eggs, generally consumed as food, such as poultry eggs, have high levels of cholesterol in them. In such circumstances, traditionally advice has been to avoid or reduce the number of eggs in the diet in order to limit cholesterol intake. Similarly, it is advisable to reduce fat, particularly saturated animal fat content in the diet for health reasons.

Egg-based products with reduced fat content are disclosed in several prior patent publications. U.S. 5227189 discloses a simulated raw egg product made of egg albumen with a separate phase of simulated non-flowable egg yolk. In this document ensuring the yolk and albumen remain separate is important and the use of colourant is exclusively to give the yolk a desired colour.

U.S. 380668 discloses a synthetic egg in which the naturally occurring egg yolk has been removed and beta-carotene added to the albumen enhance the colour.

WO 89/10704A1 is concerned with an egg product which again comprises beta-carotene as colourant. The yolk and albumen are retained in separate phases by a membrane. The colourant is therefore added to impart colour to the yolk only, and not to provide the appearance of a beaten whole egg.

U.S. 3864500 relates to an egg yolk substitute. A spice mix is used to give the product desired appearance characteristics. GB716685 discloses an egg substitute composition in dry powder form which is prepared by mixing a plurality of powdered ingredients.

WO 01/08511 A1 discloses the use of pigments as food colourants for margarines and the like. This does not relate to egg products. U.S. 4882193 is concerned with a low fat content egg product obtained by diluting yolk with albumen. The colour intensity of the yolk is enhanced by feeding hens with foods that enhance the colour of the egg laid, thus enabling the yolks to be diluted and still having the colour intensity of normal yolks.

CA 2007527 discloses a low cholesterol egg product which is again produced using egg yolks with enhanced colour resulting from specific food given to the egg laying hens.

Attempts to provide low fat and reduced cholesterol substitutes for egg products are inhibited by current European and/or British national food legislation which prevents the use of colourants and similar additives to egg or egg products. Although, it may be these regulations are relaxed it may not be possible to add the necessary proportions of acceptable colourant or use more powerful colourants.

The use of artificial colourants in eggs or egg products is currently not permitted in the UK and EEC by Regulation. In such circumstances, opportunities to provide a healthier low fat or reduced cholesterol egg product are limited.

In accordance with one aspect of the present invention, there is provided a food product comprising egg albumen combined with a colouring material comprising turmeric and paprika in relative proportions to give the product a colour that is substantially the colour of beaten whole egg.

In accordance with another aspect of the present invention there is provided a food product comprising egg albumen combined with a vegetable extract in the approximate proportions by weight percentage, 95 to 99.99% albumen and vegetable extract up to 1%, the product processed to a desired opacity and the vegetable extract emulating in the food product a colour reminiscent of beaten whole egg. Typically, the vegetable extract will be principally formed from turmeric with a level of paprika in order to achieve the colour reminiscent of beaten whole egg.

Preferably, the food product includes up to 5% by weight of a clouding agent.

Preferably, the vegetable extract is derived from plant material and/or spices and/or natural materials and/or natural extracts and/or natural flavourings, either solely or in combination.

Preferably, the approximate proportions by weight percentage will be 98 to 99.99% albumen, sufficient clouding agent preferably between 0-2% and a sufficient and preferably trace level of vegetable extract.

Typically, the albumen will be from poultry eggs, that is to say egg white separated from egg yolk.

Preferably, the clouding agent comprises a milk derived product and may be dehydrated skimmed milk.

Preferably, the vegetable extract is a liquid. Normally, the vegetable extract is a composite formed from spices and is classified as flavourings. Generally, the vegetable extract will be specifically chosen to achieve desired customer expectation in terms of the colour reminiscent of beaten whole egg whilst imparting a seasoning function.

Possibly, emulsifying agents such as lecithin, or soya bean derived modified lecithin may be added to the food product. Such emulsifying agents acting to emulsify fats in the food product for particular advantage as an ingredient with bakery foods. One or more polyphosphates may be added, such as sodium polyphosphate, to act as both an emulsifier and a preservative.

In accordance with a further aspect of the present invention there is provided a food product comprising egg albumen combined with a selected egg yolk or a derivative thereof in relative proportions to give the product a desired fat and/or cholesterol content and to resemble beaten whole egg in appearance.

Preferably, the food product also includes vegetable extract and/or other colouring material.

In accordance with the present invention there is further provided a food product comprising egg albumen combined with colouring material in the approximate proportions by weight percentage, 95% to 99.99% albumen and colouring material up to 5%, to give the product an appearance reminiscent of beaten whole egg.

Preferably, the colouring material comprises up to 1% of the product by weight, and desirably 0.1%.

Typically, the selected egg yolk or derivative is formed from beaten whole egg, separated egg yolks or a derivative thereof such an egg yolk extract, egg yolk powder.

Preferably the food product comprises vegetable extract. The vegetable extract is derived from one or more of plant material, spice, spice extract natural non-plant derived material, natural extract, natural flavourings.

Preferably, a further colouring material is Beta-carotene, or any other suitable colourant.

Preferably, the approximate proportions by weight percentage are 50% albumen, 50% selected egg yolk or derivative and a trace level of vegetable extract.

Typically, the selected egg yolk or derivative is from hens' eggs which may have been appropriately fed with feed to enhance the yellow-orange colouration of the yolks of laid eggs.

Preferably, a clouding agent is added to the food product. Typically, the clouding agent is a milk derived product and may be dehydrated skimmed milk or other suitable whitening and/or colouring agent.

Preferably, the vegetable extract is a liquid. Normally, the vegetable extract is a composite formed from spices and is classified as flavouring or other food ingredient. Typically, the vegetable extract will be principally formed from turmeric with a level of paprika extract in order to assist in achieving the colour reminiscent of beaten whole egg. Generally, the vegetable extract will be specifically chosen to achieve desired customer expectation in terms of the colour reminiscent of beaten whole egg whilst preferably imparting a seasoning function.

Possibly, emulsifying agents such as lecithin, or soya bean derived modified lecithin may be added to the food product. Such emulsifying agents act to emulsify fats in food prepared using the food product for particular advantage as an ingredient in bakery foods and such like. Other permitted ingredients may be added such as vitamins and thickeners. One or more polyphosphates, such as sodium polyphosphate may be added preferably to act as both emulsifying agent and preservative.

Further in accordance with the present invention there is provided a food including a food product as described above.

Typically, the food will be an omelette, a Spanish omelette, scrambled egg, scrambled egg mix, quiche, soufflé, crème caramel or bakery item.

Embodiments of the present invention will now be described by way of example only.

Eggs and egg products are a popular food but as described previously comprise high levels of cholesterol and some fat. Typically, 100 grams of whole beaten egg comprises 450 to 480mg of cholesterol and 10 to 11 grams of fat. The cholesterol and fat are found in only the yolk of the egg and so removal of the yolk to leave the egg white or albumen virtually eliminates fat and cholesterol from the resultant product. Unfortunately, albumen in its separated natural state or as a reconstituted spray-dried egg white with water is colourless and in its uncooked state is also transparent. In such circumstances, albumen on its own would not normally be acceptable in appearance to the consumer as a replacement food product for whole egg. People are familiar with the yellow colour of beaten whole egg along and its relatively opaque nature. A pure albumen product would not be generally accepted in appearance as a replacement or alternative to whole egg.

Generally, a reduction in fat and cholesterol levels in the food product is desirable. However, taste, appearance and cooked texture should be substantially retained even though there is a reduced fat, cholesterol and other yolk content.

Albumen when cooked or heated sets in a similar way to a normal beaten egg. Thus, in one embodiment of the present invention, albumen is combined preferably with a clouding agent and a vegetable extract formed from colouring vegetable seasoning matter in order to achieve an uncooked food product which nearly emulates a beaten egg in terms of consistency and colour. Generally, on cooking, the albumen and vegetable extract will become opaque and similar to beaten egg having been cooked in a similar way. The clouding agent gives in particular a "cosmetic" effect with the uncooked or raw food product as a liquid.

The clouding agent typically comprises skimmed milk powder mixed/dissolved with the albumen in order to emulsify it to impart opacity or clouding. Generally, in the order of up to 5 weight percent of the eventual product is constituted by the clouding agent. Normally, dehydrated skimmed milk powder is used in combination with approximately 95 to 99.99% albumen or liquid egg white in accordance with the invention to provide the beaten egg consistency. Dehydrated skimmed milk is used in order to keep fats low in the food product.

Alternate clouding agents include extracted caseins (milk proteins), titanium dioxide or whitening compounds.

A vegetable extract is added in order to achieve the desired colour reminiscent of beaten whole egg. The vegetable extract is a composite in a liquid form in order to achieve homogenous distribution or solution within the food product.

The vegetable extract comprises principally turmeric and some paprika such that the yellow base of turmeric is enriched with the reddish/orange hue of the paprika in order to achieve the colour range reminiscent of beaten whole egg. Clearly, the actual colour of beaten whole egg can be considered principally dependent upon the feed of the egg source animal. In such circumstances, a particular colour reminiscent of beaten whole egg will be defined particularly with reference to the normal range of colour of natural beaten eggs.

Turmeric and paprika are relatively mild spices and so within the food product in accordance with the present invention will have an acceptable effect with regard to taste. In any event, the present food product will typically be cooked with or without other ingredients to form omelettes, scrambled eggs, pancakes, quiche dishes, custards or crème caramel. The present food product can be used by itself and heated in order to create omelettes or scrambled egg dishes.

Turmeric although classified as a spice contains curcumin which is readily used in order to colour the base albumen. However, this colour can be too yellow and pale for acceptability and a smaller proportion of paprika extract is preferably combined with the turmeric in a composite added to the albumen/clouding agent in order to preferably achieve a more reddish/orange yellow of deeper and therefore more reminiscent colour to that of beaten egg. Alternatively, the turmeric extract and paprika extract can be added separately and combined with the albumen/clouding agent.

Turmeric, paprika and other vegetable extracts of low concentration are not classified as colourants with regard to EEC food legislation. It will be appreciated that a wide number of whole egg dishes incorporate seasoning and flavouring to taste. In such circumstances, the present invention provides a zero or virtually cholesterol free egg food product which will be acceptable to the customer as a substitute for beaten egg.

One example of a vegetable extract is a turmeric oleoresin extract OF0043 supplied by Overseal Foods Limited, Swadlincote, Derbyshire. This is a deep brown/yellow viscous liquid. Turmeric (Curcuma Longa) is processed to extract a liquid which in standardised for colour and flavour using propylene glycol and rendered water miscible by the addition of polysorbate 80.

A paprika extract that can be used is - PG0456 (solubilised paprika oleoresin) supplied by Overseal Foods Limited, Swadlincote, Derbyshire . This paprika extract is a deep red/orange viscous liquid rendered water miscible by the addition of polysorbate 80.

Generally, the vegetable extract will be standardised for reproducibility in colour between batches of food product. The above extracts are specified by the supplier, Overseal Foods Limited and have a shelf life of at least six months. In such circumstances, once a specific food composition in accordance with one embodiment of the present invention is defined for a colour which is substantially that of beaten egg with a particular source of vegetable extract, it will then be possible to achieve substantially the same colour with successive batches of food product with repeated conditions (pasteurisation temperature/mixing processes or similar treatments).

By combining the opacity achieving clouding agent with the colouring effects of the vegetable extract the base liquid albumen is adjusted to approximately emulate a beaten egg consistency and colour, particularly after cooking. The opacity achieved by a clouding agent such as skimmed milk is lower than that of beaten whole egg opacity when raw but nevertheless in combination with the vegetable extract will achieve a food product reminiscent of beaten egg acceptable to the consumer. In such circumstances, consumers of the food product will not be so disappointed that the yolk portion, which comprises the bulk of the cholesterol content of a natural egg, has been removed. In such circumstances, a consumer will use the present food product in a similar manner to that of a natural beaten egg and the eventual cooked/heated food product will resemble that if beaten eggs had been used.

The vegetable extract as indicated above, is generally in the form of a liquid. However, a solid such as a particulate material, granule or powder may be used. It will be appreciated that the present food product in its uncooked state will generally have a fixed shelf life during which it remains fresh and suitable for culinary uses. Once mixed, the liquid product is normally pasteurised or subjected to similar such treatment and packed into sterile or relatively sterile or very clean sealable packaging. It is then frozen to achieve an expected shelf life of about 12 months or stored chilled for an expected shelf life of 25-50 days at about 5°C. The level of hygiene associated with albumen/egg white isolation processing principally affects the shelf life, high levels of hygiene will typically extend acceptable shelf life for the product.

Pasteurisation of the food product is optional. The food product may also be dried and/or packed in suitable containers for sale and distribution under chilled conditions (1-7°C) or frozen (0 to -20°C).

One embodiment of the present invention teaches the production or elaboration of a food product which exploits what was hither to regarded as seasonings or spicings to effect colouration as a secondary benefit in the blend.

Optionally emulsifying agents can be added to the food product. A number of substances are classified under British or EC law as emulsifiers for food, for example lecithin, modified lecithin such as derived from Soya beans or from other sources to enhance the properties of the food. Polyphosphate may be added, such as sodium polyphosphate. Such additives can have a dual role as both emulsifying agent and preservative. In particular, emulsifying of fats is of value when the food product is used as an ingredient in baking applications e.g. the making of cakes such as traditional sponge cake.

It will be appreciated that the present food product can also play the more direct role of an egg-yolk substitute for example in emulsifying fats or oils as egg yolk and with cholesterol-free or reduced cholesterol requirements: tube-egg which is produced normally from separated egg yolk and egg white which are used to form a tube of thermally hardened or gelled egg yolk and egg white superimposed by a covering or sheath of thermally hardened or gelled egg white and being an end product which can be used after it is sliced to simulate slices of de-shelled hard boiled egg. Tube egg is used by the food industry and caterers in traditional products such as pork-pies intended for slicing and similar products such as galantines or can be used when sliced to decorate salads and other preparations.

In accordance with another embodiment of the present invention, albumen is combined with an egg yolk or derivative, which can be a purely yolk liquid or a whole beaten egg liquid, and possibly a vegetable extract . Thus, the uncooked food product approximately emulates a beaten egg in terms of consistency and colour. Where allowed, colourants may also be added. Generally, on cooking, the albumen and egg yolk or derivative will become opaque and similar to normal beaten egg having been cooked in a similar way. The food product therefore resembles beaten natural whole egg in both the cooked and uncooked state.

A clouding agent may also be added to give a "cosmetic" effect with the uncooked or raw food product as a liquid, if required. The clouding agent may comprise skimmed milk powder mixed/dissolved with the albumen in order to emulsify it and impart opacity or clouding. Alternate clouding agents include extracted caseins (milk proteins), titanium dioxide or whitening compounds such as emulsified vegetable oil.

Table A below illustrates typical cholesterol and fat content of whole beaten egg and various combinations of whole beaten whole egg and egg white as weight percentages.

**Table A**

| | **100g** **Whole** **Egg** | **50%** **Whole** **Egg** **50%** **Egg** **White** | **40%** **Whole** **Egg** **60%** **Egg** **White** | **20%** **Whole** **Egg** **80%** **Egg** **White** | **10%** **Whole** **Egg** **90%** **Egg** **White** | **0%** **Whole** **Egg** **99.9%** **Egg** **White** |
|---|---|---|---|---|---|---|
| Cholesterol (mg) | 480 | 240 | 192 | 96 | 48 | negligible |
| Fat (g) | 10 | 5 | 4 | 2 | 1 | negligible |

It will be seen that the cholesterol and fat content of food product according to the invention can be halved relative to natural egg by combining 50 weight percent whole beaten egg liquid with 50% egg white. Similar reductions in the cholesterol and fat content can be achieved with differing proportions of whole beaten egg liquid and egg white. In effect, the egg white is used as a dilutant for the cholesterol and fat content of the egg yolk. The objective is to provide a food product which combines egg yolk and egg white in an appropriate combination such that the colour and texture and opacity of the food product in a raw uncooked state and also, and possibly more importantly, in a cooked state is acceptable to a consumer as an alternative to natural whole egg.

One possibility is to combine a high colour whole egg yolk component with the egg white such that the colour even when diluted by that egg white or albumen is still sufficiently coloured to be acceptable to a consumer. The colour of whole beaten egg is principally dependent upon the colour of that yolk and this can vary according to the animal source producing the egg, the feed given to that animal and possibly other environmental conditions. Inevitably, the dilutive effect of the egg white will fade the yellow colour of the food product to a paler condition with less colour depth. Nevertheless, this may be acceptable to consumers who are principally interested in the food product in its cooked state. Thus, as outlined below, the use of the food product in a food or as an ingredient in omelettes, scrambled eggs, etc., will be acceptable.

Where necessary, the food product formed from the composition of whole beaten egg or egg yolk or egg yolk derivative and albumen may be enhanced with clouding agents and colourants as described elsewhere in this description. These clouding agents may enhance the colour depth or opacity of the food product to a condition more acceptable to a consumer or user. The colourant used will currently be a vegetable extract or other natural material which has only a secondary colouring effect in order to meet current regulations with regard to colour and content. However, where acceptable colourants such as Beta-carotene and/or other colourants may be used in order to achieve the orange/yellow colour of normal whole beaten egg. The fat and cholesterol content may be adjusted to an acceptable level by combination of the beaten whole egg or egg yolk derivative in combination with egg white/albumen and then the additional components of clouding agent, colourant/vegetable extract and other ingredients such as modifiers may be added in order to emulate the normal beaten egg colour, opacity and texture particularly when cooked. Clearly, the higher the proportion of egg white/albumen the greater the dilutive effect with respect to the beaten whole egg or egg yolk derivative such that there is a greater requirement for opacitant/clouding agents, colourants/vegetable extracts and other modifiers such as emulsifiers in the food product.

A practical embodiment of the present invention will depend upon an objective specification of a fat and cholesterol content in the eventual food product which in turn is determinant of the proportion of whole beaten egg or egg yolk derivative that can be included. The egg white/albumen is then added in order to provide the necessary ratio per unit volume or weight of the food product and then the colourant and , if necessary, clouding agent added in order to achieve the combination reminiscent of normal whole beaten egg acceptable to a user or consumer of the food product.

Clearly, in order to achieve the above objective, the whole beaten egg or yolk derivative preferably requires specific analysis in order to determine its cholesterol and fat content and subsequent proportioning relative to the albumen/egg white. As indicated previously, the specific composition of whole beaten egg and in particular egg yolk is dependent to a degree upon the animal laying that egg, the feed given to that animal and possibly environmental conditions. However relatively large volumes of whole beaten egg or yolk formed from a large number of eggs are most likely to be used to produce food product according to the present invention. Thus the average fat and cholesterol content will often average out and therefore be predictable or that relatively large batch of mixed beaten whole egg liquid will preferably be specifically analysed in order to achieve the appropriate ratio with egg white in a unit volume/weight of food product for the desired fat and cholesterol content.

It will be appreciated that the yolk content in the food product may be useful with regard to its effect as an ingredient in other foods. Thus, various embodiments of food products in accordance with the present invention may be manufactured for different usages. For example, a higher yolk content may be preferable for baking applications where the emulsifying properties of the yolk are required whilst a lower yolk content may be suitable for producing crème caramels, omelettes, scrambled eggs and quiches where the emulsification function of the yolk is not required. The present invention allows a specific food product with a desired reduction in fat and cholesterol content to be achieved which is acceptable to the consumer in terms of dietary requirements as well as resembling normal beaten egg.

It will be understood from Table A above that generally there is a substantially fixed relationship between the proportion of cholesterol and proportion of fat in the egg yolk of an egg. In such circumstances, this ratio provides an inter-relationship between the normally achievable levels of cholesterol and fat in the food product. For example, if a particular level of fat is acceptable or desirable in the food product then by implication there is a related level of cholesterol associated with that fat content as illustrated in Table A. For example, 4 grams of egg yolk fat will provide a food product with 192 milligrams of cholesterol per 100 grams of food product. In such circumstances, cascaded mixing of differing proportions of cholesterol to egg yolk fat food product combinations will be required in order to achieve differing fat to cholesterol proportional ratios from that naturally provided.

All of the fat and cholesterol in the whole egg is provided by the yolk. Thus, optionally in accordance with the present invention the yolk can be removed from the whole egg in order to determine the volume of albumen/egg white content within that whole egg, either statistically or specifically in the batch process as described previously. Such analysis will allow determination of the necessary additional albumen/egg white required to be added to the whole egg or yolk derivative to achieve the food product with the desired objective cholesterol and fat content.

Alternatively, a low or zero cholesterol and fat food product can be provided, dependent upon other components, by combining albumen/egg white with simply colouring material and optionally with vegetable extract and/or other ingredients to provide a colour closely resembling that of beaten whole egg.

A vegetable extract may be added in order to facilitate achievement of a desired appearance, texture and colour of the product. The vegetable extract is a composite preferably in a liquid form in order to assist in homogenous distribution or solution within the food product.

The preferred vegetable extract principally is from turmeric and paprika such that the yellow base of turmeric and the reddish/orange colour of the paprika can be combined to achieve a desired colour. The actual colour of beaten whole egg can be considered principally dependent upon the feed of the egg source animal. In such circumstances, a particular colour reminiscent of beaten whole egg will be defined particularly with reference to the normal range of colour of natural beaten eggs.

Turmeric and paprika are relatively mild spices and so within the food product in accordance with the present invention will have an acceptable or desirable effect with regard to taste. In any event, the present food product will typically be cooked with or without other ingredients to form omelettes, scrambled eggs, pancakes, quiche dishes, custards, flour confectionery or crème caramel. The present food product can be used by itself and heated in order to create omelettes or scrambled egg dishes.

Turmeric although classified as a spice contains curcumin which acts to colour the base albumen or yolk liquid/albumen combination. However, this colour although acceptable may be improved by adding a smaller proportion of paprika extract which is preferably combined with the turmeric in a composite added to the albumen/beaten whole egg or yolk liquid in order to preferably achieve a deeper colour more reminiscent to that of normal beaten egg. Alternatively, the turmeric extract and paprika extract can be added separately and combined with the albumen/clouding agent.

Turmeric, paprika and other vegetable extracts of low concentration are not classified as colourants with regard to EEC food legislation. It will be appreciated that a wide number of whole egg dishes incorporate seasoning and flavouring to taste. In such circumstances, the present invention provides a low fat and cholesterol egg food product which will be acceptable to the customer as a substitute for beaten egg.

One example of a vegetable extract is a turmeric oleoresin extract OF0043 supplied by Overseal Foods Limited, Swadlincote, Derbyshire. This is a deep brown/yellow viscous liquid. Turmeric (Curcuma Longa) is processed to extract a liquid which is standardised for colour and flavour using propylene glycol and rendered water miscible by the addition of polysorbate 80.

A paprika extract that can be used is - PE0456 (solubilised paprika oleoresin) supplied by Overseal Foods Limited, Swadlincote, Derbyshire. This paprika extract is a deep red/orange viscous liquid rendered water miscible by the addition of polysorbate 80.

Generally, the vegetable extract will be standardised for reproducibility of colour between batches of food product. The above extracts are specified by the supplier, Overseal Foods Limited and have a shelf life of at least six months. In such circumstances, once a specific food composition in accordance with the present invention is defined for a colour which is reminiscent of beaten egg with a particular source of vegetable extract, it will then be possible to achieve substantially the same colour with successive batches of food product with repeated conditions (pasteurisation temperature/mixing processes).

The degree of opacity of the food product depends upon the amount of beaten whole egg or egg yolk derivative in the diluting albumen. Thus, the opacity may need to be adjusted to resemble that of a beaten egg consistency and colour. This adjustment is achieved by adding a clouding agent such as skimmed milk. Suitable amounts will achieve a food product reminiscent of beaten egg acceptable to the average consumer. In such circumstances, a consumer will use the present food product in a similar manner to that of a natural beaten egg and the eventual cooked/heated food product will resemble that as if normal beaten eggs had been used.

The vegetable extract as indicated above, is generally in the form of a liquid. However, solid vegetable extract may be used, desirably in particulate form such as granules, powder or paste. It will be appreciated that the present food product in its uncooked state will generally have a fixed shelf life during which it remains fresh and suitable for culinary uses. Once mixed, the liquid product is treated, preferably by a heat treatment process such as pasteurisation or similar, which aims to reduce the micro organism population whilst substantially maintaining the liquid state of the product and packed into sterile or relatively sterile or very clean sealable packaging. It is then frozen to achieve an expected shelf life of about 12 months or stored chilled for an expected shelf life of 25-50 days at about 5°C. The level of hygiene associated with the albumen/egg white isolation processing principally affects the shelf life, high levels of hygiene will typically extend acceptable shelf life for the product.

Pasteurisation of the food product is optional. The food product may also be spray dried and/or packed in suitable containers for sale and distribution under chilled conditions (1-7°C) or frozen (0 to -20°C).

The present food product may exploit what was hitherto regarded as seasonings, spicings or flavourings to effect colouration as a secondary benefit in the blend.

As indicated previously, the colour as well as the fat content and cholesterol content of egg yolk is significantly dependent upon the egg laying animal and the feed given to that animal. In such circumstances, the nature of foods given, e.g. sunflowers, vegetable extracts or other colourants may be added to the feed of the egg laying animal to influence the yolk colour of the laid egg. Such alteration may be utilised in order to achieve the desired colour in the food product reminiscent of normal beaten egg more easily and preferably without recourse to specific addition of clouding agents, colorants/vegetable extracts and other agents. It will be appreciated that such alteration in the egg laying animal feed may also alter the fat and cholesterol content of the yolk laid.

The colour of eggs from different egg laying animals may be categorised in accordance with the present invention such that a blend of such specific colours is achieved in combination with the albumen/egg white for the present food product colour, opacity and texture acceptable to the consumer but with reduced fat and cholesterol content.

Additives that might be included in the egg laying animal feed are the turmeric, paprika and other vegetable or plant extracts as described previously along with sunflower seeds, canthanxanthin, digestively transmittable colourants, and other material giving a colour effect to the yolk. Empirical testing may be employed to determine the affect upon the egg laying animal in terms of egg yolk for various compositions of feed, where permitted.

It will be understood that albumen from the egg laying animal may be mixed with egg yolk or a yolk derivative or mix selected from another egg laying animal to provide an acceptable food product.

Optionally emulsifying agents can be added to the food product. A number of substances are classified under British or EC law as emulsifiers for food, for example lecithin, modified lecithin such as derived from Soya beans or from other sources to enhance the properties of the food. A polyphosphate, such as sodium polyphosphate can be added to act as both emulsifying agent and preservative. In particular, emulsifying of fats is of value when the food product is used as an ingredient in baking applications e.g. the making of cakes such as traditional sponge cake.

Any of these blends can be further processed before, on, or after pasteurisation has been effected to obtain foods or recipe products often by blending with other ingredients. Examples are:
- Omelette mix in the liquid state at 20°C normally sold in the frozen state or chilled 1-10°C
- Ready cooked omelettes
- Scrambled egg mix in the liquid state at 20°C normally sold in the frozen state or chilled state 1-10°C
- Readily cooked Spanish omelettes (which are omelettes containing other constituents which can be vegetables or meat, meat products, ham, sausage
- Quiches
- Custards, crème Anglaise, crème caramel
- Cakes
- Biscuits
- Bakery products

The present food product once formulated may be dehydrated for storage and then re-constituted as required by addition of water in the correct proportions. If dehydrated albumen is used it is preferably made from desugared egg albumen which has had most if not all of the naturally occurring lactose removed by fermentation to avoid or reduce the browning effect that would otherwise occur during dehydration at elevated temperatures (Maillard Reaction). Alternatively, the food product could be constituted/composed by mixing dried albumen, clouding agent and vegetable extract together, or by mixing dried albumen and dried beaten whole egg or yolk liquid along with possibly clouding agent and vegetable extract/colourant, all of which are preferably in the dry state.

## Claims

1. A food product **characterised in that** the food product comprises egg albumen combined with a colouring material comprising turmeric and paprika in relative proportions to give the product a colour that is substantially the colour of beaten whole egg.

2. A food product according to claim 1, **characterised in that** the colouring material comprises a vegetable extract.

3. A food product according to claim 2, **characterised in that** the product comprises 95 to 99.99% by weight albumen and up to 1 % by weight vegetable extract.

4. A food product according to claim 1, 2 or 3, **characterised in that** the food product includes up to 5% by weight of a clouding agent to give a desired opacity.

5. A food product according to any preceding claim, **characterised in that** the colouring material is derived from plant material and/or spices and/or natural materials and/or natural extracts and/or natural flavourings, either solely or in combination.

6. A food product according to claim 4 or claim 5, **characterised in that** the clouding agent comprises a milk derived product.

7. A food product according to claim 6, **characterised in that** the clouding agent comprises dehydrated skimmed milk.

8. A food product according to any of claims 2 to 7, **characterised in that** the approximate proportions are 98 to 99.99% by weight albumen, 0 to 2% by weight clouding agent and a trace level of vegetable extract.

9. A food product according to any preceding claim, **characterised in that** the albumen is derived from poultry eggs.

10. A food product according to claim 9, **characterised in that** the albumen is derived from egg white separated from egg yolk.

11. A food product according to any preceding claim, **characterised in that** the colouring material is a liquid, solid or paste.

12. A food product according to any preceding claim, **characterised in that** the colouring material is a composite formed from spices or spice extracts classified as flavourings.

13. A food product according to any preceding claim, **characterised in that** the colouring material is selected to impart seasoning to the food product.

14. A food product according to any preceding claim **characterised in that** the product includes an emulsifying agent.

15. A food product according to claim 14, **characterised in that** the emulsifying agent comprises lecithin, or soya bean derived modified lecithin, and/or a polyphosphate.

16. A food product according to claim 1, **characterised in that** the colouring material comprises egg yolk or a derivative thereof, and the relative proportions of the egg albumen and egg yolk or derivative are such as to give the product a desired fat and/or cholesterol content.

17. A food product according to claim 16, **characterised in that** the product includes a further colouring material.

18. A food product according to claim 16 or 17 **characterised in that** the product comprises 95 to 99.99% by weight albumen and up to 5% by weight of the further colouring material.

19. A food product according to claim 18 **characterised in that** the further colouring material comprises up to 1% by weight of the food product.

20. A food product according to claim 19, **characterised in that** the further colouring material comprise 0.1% by weight of the food product.

21. A food product according to any of claims 16 to 20, **characterised in that** the further colouring material is Beta-carotene.

22. A food product according to any of claims 16 to 21, **characterised in that** the selected egg yolk or derivative is formed from beaten whole egg, separated egg yolks or a derivative thereof such as egg yolk extract, egg yolk powder.

23. A food product according to any of claims 16 to 22, **characterised in that** the further colouring material comprises a vegetable extract.

24. A food product according to claim 23, **characterised in that** the vegetable extract is derived from one or more of plant material, one or more spices, natural non-plant derived material, natural extract, natural flavourings.

25. A food product according to claim 23 or claim 24, **characterised in that** the product comprises approximately 50% by weight selected egg yolk or derivative and a trace level of the vegetable extract.

26. A food product according to any of claims 23 to 25, **characterised in that** the vegetable extract is a liquid.

27. A food product according to any of claims 23 to 26, **characterised in that** the vegetable extract is a composite formed from spices classified as flavouring or other food ingredient.

28. A food product according to any of claims 23 to 27, **characterised in that** the vegetable extract is selected to impart seasoning to the food product.

29. A food product according to any of claims 16 to 28, **characterised in that** the selected egg yolk or derivative is from hens' eggs, the hens having been fed with appropriate feed to enhance the yellow-orange colouring of the yolks of laid eggs.

30. A food product according to any of claims 16 to 29, **characterised in that** the product comprises a clouding agent.

31. A food product according to claim 30, **characterised in that** the clouding agent is a milk derived product or other suitable whitening and/or colouring agent.

32. A food product according to claim 31, **characterised in that** the milk derived product comprises dehydrated skimmed milk.

33. A food product according to any of claims 16 to 32, **characterised in that** the product comprises an emulsifying agent.

34. A food product according to claim 33, **characterised in that** the emulsifying agent comprises lecithin, or soya bean derived modified lecithin and/or a polyphosphate.

35. A food including a food product according to any one or more of the preceding claims.

36. A food according to claim 35, comprising, or being transformable to an omelette, a Spanish omelette, scrambled egg, scrambled egg mix, quiche, soufflé, crème caramel, bakery item, flour confectionery.

## Patentansprüche

1. Lebensmittel-Produkt, **dadurch gekennzeichnet, dass** das Lebensmittel-Produkt Ei-Albumin aufweist, das mit einem Färbematerial kombiniert ist, welches Kurkuma (Gelbwurz) und Paprika in relativen Anteilen enthält, um dem Produkt eine Farbe zu verleihen, die im wesentlichen die Farbe von geschlagenem Vollei ist.

2. Lebensmittel-Produkt nach Anspruch 1, **dadurch gekennzeichnet, dass** das Färbematerial ein Pflanzen-Extrakt enthält.

3. Lebensmittel-Produkt nach Anspruch 2, **dadurch gekennzeichnet, dass** das Produkt 95 bis 99,99 Gew.% Albumin und bis zu 1 Gew.% Pflanzen-Extrakt aufweist.

4. Lebensmittel-Produkt nach Anspruch 1, 2 oder 3, **dadurch gekennzeichnet, dass** das Lebensmittel-Produkt bis zu 5 Gew.% eines Trübungsmittels enthält, um eine gewünschte Opazität zu erhalten.

5. Lebensmittel-Produkt nach einem der vorhergehenden Ansprüche, **dadurch gekennzeichnet, dass** das Färbematerial von Pflanzenmaterial und/oder Gewürzen und/oder natürlichen Materialien und/oder natürlichen Extrakten und/oder natürlichen Aromastoffen allein oder in Kombination abgeleitet ist.

6. Lebensmittel-Produkt nach Anspruch 4 oder 5, **dadurch gekennzeichnet, dass** das Trübungsmittel ein von Milch abgeleitetes Produkt enthält.

7. Lebensmittel-Produkt nach Anspruch 6, **dadurch gekennzeichnet, dass** das Trübungsmittel entwässerte entrahmte Milch enthält.

8. Lebensmittel-Produkt nach einem der Ansprüche 2 bis 7, **dadurch gekennzeichnet, dass** die näherungsweisen Anteile 98 bis 99,99 Gew.% Albumin, 0 bis 2 Gew.% Trübungsmittel und in Spuren Pflanzen-Extrakt sind.

9. Lebensmittel-Produkt nach einem der vorhergehenden Ansprüche, **dadurch gekennzeichnet, dass** das Albumin von Geflügel-Eiern abgeleitet ist.

10. Lebensmittel-Produkt nach Anspruch 9, **dadurch gekennzeichnet, dass** das Albumin von Eiweiß abgeleitet ist, das vom Eigelb getrennt ist.

11. Lebensmittel-Produkt nach einem der vorhergehenden Ansprüche, **dadurch gekennzeichnet, dass** das Färbematerial eine Flüssigkeit, ein Feststoff oder eine Paste ist.

12. Lebensmittel-Produkt nach einem der vorhergehenden Ansprüche, **dadurch gekennzeichnet, dass** das Färbematerial eine Zusammensetzung ist, die aus Gewürzen oder GewürzExtrakten besteht, die als Aromastoffe klassifiziert sind.

13. Lebensmittel-Produkt nach einem der vorhergehenden Ansprüche, **dadurch gekennzeichnet, dass** das Färbematerial ausgewählt ist, um dem Lebensmittel-Produkt Würze zu verleihen.

14. Lebensmittel-Produkt nach einem der vorhergehenden Ansprüche, **dadurch gekennzeichnet, dass** das Produkt einen Emulgator enthält.

15. Lebensmittel-Produkt nach Anspruch 14, **dadurch gekennzeichnet, dass** der Emulgator Lecithin oder aus Sojabohnen abgeleitetes modifiziertes Lecithin und/oder ein Polyphosphat aufweist.

16. Lebensmittel-Produkt nach Anspruch 1, **dadurch gekennzeichnet, dass** das Färbematerial Eigelb oder ein Derivat davon aufweist, und dass die relativen Anteile an Ei-Albumin und Eigelb oder Derivaten derart sind, dass sie dem Produkt einen gewünschten Fett- und/oder Cholesterin-Gehalt verleihen.

17. Lebensmittel-Produkt nach Anspruch 16, **dadurch gekennzeichnet, dass** das Produkt ein weiteres Färbematerial aufweist.

18. Lebensmittel-Produkt nach Anspruch 16 oder 17, **dadurch gekennzeichnet, dass** das Produkt 95 bis 99,99 Gew.% Albumin und bis zu 5 Gew.% des weiteren Färbematerials aufweist.

19. Lebensmittel-Produkt nach Anspruch 18, **dadurch gekennzeichnet, dass** das weitere Färbematerial bis zu 1 Gew.% des Lebensmittel-Produktes aufweist.

20. Lebensmittel-Produkt nach Anspruch 19, **dadurch gekennzeichnet, dass** das weitere Färbemittel 0,1 Gew.% des Lebensmittel-Produktes aufweist.

21. Lebensmittel-Produkt nach einem der Ansprüche 16 bis 20, **dadurch gekennzeichnet, dass** das weitere Färbematerial Beta-Carotin ist.

22. Lebensmittel-Produkt nach einem der Ansprüche 16 bis 21, **dadurch gekennzeichnet, dass** das getrennte Eigelb oder Derivat aus geschlagenem Vollei, getrenntem Eigelb oder einem Derivat davon, wie Eigelb-Extrakt oder Eigelb-Pulver, gebildet ist.

23. Lebensmittel-Produkt nach einem der Ansprüche 16 bis 22, **dadurch gekennzeichnet, dass** das weitere Färbematerial ein Pflanzen-Extrakt aufweist.

24. Lebensmittel-Produkt nach Anspruch 23, **dadurch gekennzeichnet, dass** das Pflanzen-Extrakt aus einem oder mehreren Pflanzen-Materialien, aus einem oder mehreren Gewürzen, aus natürlichem, nicht aus Pflanzen abgeleitetem Material, aus natürlichem Extrakt oder aus natürlichen Aromastoffen abgeleitet ist.

25. Lebensmittel-Produkt nach Anspruch 23 oder 24, **dadurch gekennzeichnet, dass** das Produkt etwa 50 Gew.% getrenntes Eigelb oder Derivat sowie in Spuren das Pflanzen-Extrakt enthält.

26. Lebensmittel-Produkt nach einem der Ansprüche 23 bis 25, **dadurch gekennzeichnet, dass** das Pflanzen-Extrakt eine Flüssigkeit ist.

27. Lebensmittel-Produkt nach einem der Ansprüche 23 bis 26, **dadurch gekennzeichnet, dass** das Pflanzen-Extrakt eine Zusammensetzung ist, welche aus Gewürzen besteht, die als Aromastoff oder anderer Lebensmittel-Inhaltsstoff klassifiziert sind.

28. Lebensmittel-Produkt nach einem der Ansprüche 23 bis 27, **dadurch gekennzeichnet, dass** das Pflanzen-Extrakt ausgewählt ist, um dem Lebensmittel-Produkt Würze zu verleihen.

29. Lebensmittel-Produkt nach einem der Ansprüche 16 bis 28, **dadurch gekennzeichnet, dass** das getrennte Eigelb oder Derivat von Hühnereiern stammt, wobei die Hennen mit geeignetem Futter gefüttert wurden, um die gelb-orange Färbung der Dotter der gelegten Eier zu verstärken.

30. Lebensmittel-Produkt nach einem der Ansprüche 16 bis 29, **dadurch gekennzeichnet, dass** das Produkt ein Trübungsmittel aufweist.

31. Lebensmittel-Produkt nach Anspruch 30, **dadurch gekennzeichnet, dass** das Trübungsmittel ein von Milch abgeleitetes Produkt oder ein anderes geeignetes Aufhellungs- oder Färbemittel ist.

32. Lebensmittel-Produkt nach Anspruch 31, **dadurch gekennzeichnet, dass** das von Milch abgeleitete Produkt entwässerte entrahmte Milch aufweist.

33. Lebensmittel-Produkt nach einem der Ansprüche 16 bis 32, **dadurch gekennzeichnet, dass** das Produkt einen Emulgator aufweist.

34. Lebensmittel-Produkt nach Anspruch 33, **dadurch gekennzeichnet, dass** der Emulgator Lecithin oder aus Sojabohnen abgeleitetes modifiziertes Lecithin und/oder ein Polyphosphat aufweist.

35. Lebensmittel, welches ein Lebensmittel-Produkt nach einem oder mehreren der vorhergehenden Ansprüche enthält.

36. Lebensmittel nach Anspruch 35, welches ein Omelett, ein spanisches Omelett, Rühreier, ein Rührei-Gemisch, eine Quiche, ein Soufflé, Karamell-Creme, einen Gebäck-Artikel oder eine Mehl-Süssware enthält oder dazu umwandelbar ist.

## Revendications

1. Produit alimentaire **caractérisé en ce que** le produit alimentaire comprend de l'albumine d'oeuf combinée à un matériau colorant comprenant du curcuma et du paprika dans des proportions relatives pour donner au produit une couleur qui est sensiblement la couleur de l'oeuf entier battu.

2. Produit alimentaire selon la revendication 1, **caractérisé en ce que** le matériau colorant comprend un extrait végétal.

3. Produit alimentaire selon la revendication 2, **caractérisé en ce que** le produit comprend de 95 % à 99,99 % en poids d'albumine et jusqu'à 1 % en poids d'extrait végétal.

4. Produit alimentaire selon la revendication 1, 2 ou 3, **caractérisé en ce que** le produit alimentaire comprend jusqu'à 5 % en poids d'un agent opacifiant pour donner une opacité désirée.

5. Produit alimentaire selon l'une quelconque des revendications précédentes, **caractérisé en ce que** le matériau colorant est obtenu à partir d'un matériau végétal et/ou d'épices et/ou de matériaux naturels et/ou d'extraits naturels et/ou d'arômes naturels, seuls ou en combinaison.

6. Produit alimentaire selon la revendication 4 ou la revendication 5, **caractérisé en ce que** l'agent opacifiant comprend un produit dérivé du lait.

7. Produit alimentaire selon la revendication 6, **caractérisé en ce que** l'agent opacifiant comprend du lait écrémé déshydraté.

8. Produit alimentaire selon l'une quelconque des revendications 2 à 7, **caractérisé en ce que** les proportions approximatives sont de 98 % à 99,99 % en poids d'albumine, de 0 % en poids à 2 % en poids d'agent opacifiant et d'extraits végétaux à l'état de traces.

9. Produit alimentaire selon l'une quelconque des revendications précédentes, **caractérisé en ce que** l'albumine est dérivée d'oeufs de volaille.

10. Produit alimentaire selon la revendication 9, **caractérisé dans ce que** l'albumine est dérivée du blanc d'oeuf séparé dujaune d'oeuf.

11. Produit alimentaire selon l'une quelconque des revendications précédentes, **caractérisé en ce que** le matériau colorant est un liquide, un solide ou une pâte.

12. Produit alimentaire selon l'une quelconque des revendications précédentes, **caractérisé en ce que** le matériau colorant est un composite formé à partir d'épices ou d'extraits d'épice classifiés en tant qu'arômes.

13. Produit alimentaire selon l'une quelconque des revendications précédentes, **caractérisé en ce que** le matériau colorant est choisi pour donner un assaisonnement au produit alimentaire.

14. Produit alimentaire selon l'une quelconque des revendications précédentes, **caractérisé en ce que** le produit comprend un agent émulsifiant.

15. Produit alimentaire selon la revendication 14, **caractérisé en ce que** l'agent émulsifiant comprend de la lécithine, ou de la lécithine modifiée dérivée du soja, et/ou un polyphosphate.

16. Produit alimentaire selon la revendication 1, **caractérisé en ce que** le matériau colorant comprend du jaune d'oeuf ou un dérivé de celui-ci, et les proportions relatives de l'albumine d'oeuf et du jaune d'oeuf ou du dérivé sont telles qu'elles attribuent au produit une teneur en graisse et/ou en cholestérol désirée.

17. Produit alimentaire selon la revendication 16, **caractérisé en ce que** le produit comprend un matériau colorant supplémentaire.

18. Produit alimentaire selon la revendication 16 ou 17, **caractérisé en ce que** le produit comprend de 95 % à 99,99 % en poids d'albumine et jusqu'à 5 % en poids de matériau colorant supplémentaire.

19. Produit alimentaire selon la revendication 18, **caractérisé en ce que** le matériau colorant supplémentaire comprend jusqu'à 1 % en poids du produit alimentaire.

20. Produit alimentaire selon la revendication 19, **caractérisé en ce que** le matériau colorant supplémentaire comprend 0,1 % en poids du produit alimentaire.

21. Produit alimentaire selon l'une quelconque des revendications 16 à 20,
**caractérisé en ce que** le matériau colorant supplémentaire est le bêta-carotène.

22. Produit alimentaire selon l'une quelconque des revendications 16 à 21, **caractérisé en ce que** le jaune d'oeuf sélectionné ou le dérivé est formé à partir d'oeuf entier battu, de jaunes d'oeuf séparés ou un dérivé de ceux-ci tel qu'un extrait de jaune d'oeuf, une poudre de jaune d'oeuf.

23. Produit alimentaire selon l'une quelconque des revendications 16 à 22, **caractérisé en ce que** le matériau colorant supplémentaire comprend un extrait végétal.

24. Produit alimentaire selon la revendication 23, **caractérisé en ce que** l'extrait végétal est dérivé d'une ou plusieurs plantes, d'une ou plusieurs épices, d'un élément naturel dérivé d'un non-végétal, d'un extrait naturel, d'arômes naturels.

25. Produit alimentaire selon la revendication 23 ou la revendication 24, **caractérisé en ce que** le produit comprend approximativement 50 % en poids de jaune d'oeuf sélectionné ou de dérivé et l'extrait végétal à l'état de traces.

26. Produit alimentaire selon l'une quelconque des revendications 23 à 25, **caractérisé en ce que** l'extrait végétal est un liquide.

27. Produit alimentaire selon l'une quelconque des revendications 23 à 26, **caractérisé en ce que** l'extrait végétal est un composite formé à partir d'épices classées comme arôme ou autre ingrédient alimentaire.

28. Produit alimentaire selon l'une quelconque des revendications 23 à 27, **caractérisé en ce que** l'extrait végétal est choisi pour donner un assaisonnement au produit alimentaire.

29. Produit alimentaire selon l'une quelconque des revendications 16 à 28, **caractérisé en ce que** le jaune d'oeuf sélectionné ou le dérivé provient d'oeufs de poules, les poules ayant été alimentées avec une alimentation appropriée pour augmenter la coloration j'aune-orange des jaunes d'oeuf des oeufs pondus.

30. Produit alimentaire selon l'une quelconque des revendications 16 à 29, **caractérisé en ce que** le produit comprend un agent opacifiant.

31. Produit alimentaire selon la revendication 30, **caractérisé en ce que** l'agent opacifiant est un produit dérivé du lait ou un autre agent de blanchiment et/ou matériau colorant approprié.

32. Produit alimentaire selon la revendication 31, **caractérisé en ce que** le produit dérivé du lait comprend du lait écrémé déshydraté.

33. Produit alimentaire selon l'une quelconque des revendications 16 à 32, **caractérisé en ce que** le produit comprend un agent émulsifiant.

34. Produit alimentaire selon la revendication 33, **caractérisé en ce que** l'agent émulsifiant comprend de la lécithine, ou de la lécithine modifiée dérivée du soja et/ou un polyphosphate.

35. Aliment comprenant un produit alimentaire selon l'une ou plusieurs des revendications précédentes.

36. Aliment selon la revendication 35, comprenant, ou étant transformable en une omelette, une omelette à l'espagnole, des oeufs brouillés, un mélange d'oeufs brouillés, une quiche, un soufflé, une crème caramel, un article de boulangerie, une pâtisserie.
